**Europäisches Patentamt**

(19) **European Patent Office**

**Office européen des brevets**

(11) Numéro de publication: **0 213 024**
**B1**

(12) # FASCICULE DE BREVET EUROPÉEN

(45) Date de publication du fascicule du brevet:
**12.07.89**

(21) Numéro de dépôt: **86401682.9**

(22) Date de dépôt: **28.07.86**

(51) Int. Cl.⁴: **F 22 B 37/22,** F 16 J 13/10,
B 25 B 5/06, B 25 B 5/08

(54) **Dispositif de mise en place et de maintien d'une plaque d'obturation d'un orifice dans une enceinte.**

(30) Priorité: **09.08.85 FR 8512215**
**10.01.86 FR 8600308**

(43) Date de publication de la demande:
**04.03.87 Bulletin 87/10**

(45) Mention de la délivrance du brevet:
**12.07.89 Bulletin 89/28**

(84) Etats contractants désignés:
**BE CH DE LI SE**

(56) Documents cité:
**DE-A-1 525 916**
**DE-A-2 065 506**
**FR-A-2 330 122**
**FR-A-2 532 715**
**GB-A-514 971**
**US-A-4 085 661**
**US-A-4 303 177**

(73) Titulaire: **FRAMATOME, Tour Fiat 1, Place de la Coupole, F-92400 Courbevoie (FR)**

(72) Inventeur: **Lavalerie, Claude Antoine, 12 Résidence du Bois de Boulogne, F-95250 L'Isle Adam (FR)**

(74) Mandataire: **Moncheny, Michel, c/o Cabinet Lavoix 2 Place d'Estienne d'Orves, F-75441 Paris Cedex 09 (FR)**

LIBER, STOCKHOLM 1989

## Description

La présente invention a pour objet un dispositif de mise en place et de maintien d'une plaque d'obturation destinée à boucher un orifice pratiqué dans une enceinte, et plus particulièrement adaptée à l'obturation provisoire d'orifices pratiqués dans les boîtes à eau de générateurs de vapeur pour les centrales nucléaires.

Un tel générateur de vapeur est en effet traversé par l'eau sous pression, chauffée au contact des éléments combustibles du réacteur nucléaire, qui circule dans un faisceau de tubes en U et transmet sa chaleur à un fluide secondaire qui est ainsi vaporisé à l'intérieur du générateur. Le faisceau de tubes en U est porté par une plaque tubulaire délimitant avec le fond du générateur de vapeur une boîte à eau hémisphérique séparée en deux compartiments, respectivement d'entrée et de sortie de l'eau sous pression, chacun de ces compartiments comportant un orifice de raccordement au circuit primaire du réacteur dont le diamètre doit être important pour permettre des débits élevés.

Il est périodiquement nécessaire d'accéder à l'intérieur des compartiments de la boîte à eau, par exemple pour des opérations de vérification et d'entretien, et de ce fait de pouvoir isoler ces compartiments du circuit primaire du réacteur lorsque celui-ci est arrêté.

L'accès aux compartiments s'effectue par des trous d'homme qui doivent avoir la plus faible dimension possible et par suite un diamètre juste suffisant pour le passage normal d'un opérateur, permettant ainsi l'examen et les interventions éventuelles sur les tubes de la plaque tubulaire.

Naturellement, pendant ces opérations, le circuit de circulation du fluide primaire est arrêté afin d'écarter tout risque d'arrivée intempestive d'eau chaude ou tiède dans les boîtes à eau du générateur de vapeur. D'autre part, l'orifice par lequel débouche la canalisation du fluide primaire a un assez grand diamètre et il faut envisager le risque de chute de l'opérateur ou d'outils dans la canalisation. Enfin, cet orifice béant constitue psychologiquement une gêne et pour toutes ces raisons, il est indispensable d'obturer le plus rapidement possible cet orifice lorsqu'un opérateur doit pénétrer à l'intérieur du fond du générateur.

C'est pourquoi, dès que l'opérateur a pénétré dans le fond du générateur de vapeur, il met en place une plaque d'obturation sur l'orifice de la conduite du fluide primaire. Cependant, comme cet orifice a des dimensions généralement supérieures aux dimensions du trou d'homme, la plaque doit être introduite dans le fond en plusieurs morceaux.

Le brevet FR-A-2 340 489, du même déposant, décrit un dispositif d'obturation comportant un couvercle composé d'un élément central et de deux éléments latéraux en forme de C dont les dimensions permettent le passage dans le trou d'homme. Chaque élément latéral comprend de part et d'autre d'une échancrure, deux bras articulés à leurs extrémités sur les bras correspondants de l'autre élément autour de deux charnières dont les axes sont alignés. Les deux éléments latéraux sont repliés l'un sur l'autre pour le passage dans le trou d'homme, puis ouverts pour s'appliquer sur la portée d'appui, chaque élément recouvrant une partie de ladite portée, de part et d'autre de l'axe d'articulation des charnières, et l'élément central recouvrant l'ouverture formée par les deux échancrures côte à côte et assurant le raidissement de l'ensemble.

Le principal inconvénient de ce type de plaque d'obturation réside dans son mode de fixation par vis à action directe. Ces dernières, en effet, sont implantées à la périphérie de la plaque suivant une orientation perpendiculaire à celle-ci puis vissées dans l'anneau porteur de forme circulaire qui est soudé au plus près du raccordement des tubulures. Elles font alors l'objet de diverses sollicitations mécaniques, engendrées lors du placage du joint d'étanchéité et de la reprise de l'effet de fond constitué par la pression de la colonne d'eau présente dans la tuyauterie pendant l'arrêt du réacteur. Ces sollicitations sont de nature à occasioner au fil des manoeuvres des ruptures du fût des vis ou des impacts sur les filetages des trous de l'anneau porteur, entraînant alors des temps de séjour importants dans la boîte à eau pour l'enlèvement des parties rompues et les réparations nécessaires. De plus, pendant cette réfection, le personnel d'intervention est soumis à l'ambiance active régnant dans la boîte à eau.

On connaît également, dans le FR-A-2 554 208, un dispositif d'obturation comprenant au moins deux panneaux composés d'un support léger revêtu de fibres de carbone liées par de la résine.

Mais dans ce cas, on ne peut pas réaliser des trous périphériques directement dans la fibre de carbone, car de tels usinages entraîneraient un affaiblissement significatif de la tenue mécanique du dispositif d'obturation. De plus, la solution consistant à renforcer les zones à trous par des parties métalliques fait ressurgir les problèmes rencontrés dans le dispositif décrit précédemment.

On connaît dans le GB-A-514 971 un dispositif de mise en place et de maintien d'une plaque d'obturation d'un orifice dans une enceinte comportant un anneau porteur fixé sur le pourtour dudit orifice à obturer. L'anneau porteur comporte une gorge interne à une face inclinée à l'intérieur de laquelle sont positionnées des cales de brigade qui s'appliquent sur la périphérie de la plaque d'obturation et qui, coopérant avec l'anneau porteur, se déplacent individuellement dans ladite gorge selon une direction radiale et descendante pour exercer un effort de compression sur ladite plaque d'obturation.

On connaît également dans le FR-A-2 330 122 un dispositif de solidarisation du couvercle de fermeture et de la structure interne supérieure d'un réacteur nucléaire dans lequel des cales de bridage sont déplacées à l'aide d'une vis ou d'un vérin et bloquées par une plaque.

La présente inventione a pour objet un dispositif de mise en place et de maintien d'une plaque d'obturation d'un orifice dans une enceinte comportant un anneau porteur fixé sur la pourtour dudit orifice à obturer, et muni d'une gorge interne à une face inclinée à l'intérieur de laquelle sont positionnées des cales de bridage qui s'appliquent sur la périphérie de la plaque d'obturation et qui, sous l'action d'organes de blocage coopérant avec l'anneau porteur se déplacent individuellement dans ladite gorge selon une direction radiale et descendante pour exercer un effort de compression sur ladite plaque d'obturation, caractérisé par le fait que les organes de blocage sont constitués par une série de vérins disposés en périphérie de la plaque d'obturation et assemblés entre eux par l'intermédiaire d'au moins un secteur de couronne circulaire sous forme d'un ou de plusieurs chapelets indépendants couvrant le pourtour de la plaque d'obturation, l'actionnement simultané desdits vérins de bridage étant obtenu grâce à une commande unique qui permet d'agir uniformément et individuellement sur chaque cale de bridage.

Selon une autre caractéristique de l'invention, les cales de bridage et la gorge interne ont leur face supérieure inclinée d'un angle supérieur à l'angle de frottement des matériaux venant en contact.

L'invention sera mieux comprise à l'aide de la description qui va suivre, donnée uniquement à titre d'exemple et faite en se référant aux dessins annexés sur lesquels:

- la Fig. 1 est une vue en perspective du fond d'un générateur de vapeur;
- la Fig. 2 est une vue partielle de dessus du dispositif selon l'invention;
- la Fig. 3 est une vue à plus grande échelle en coupe partielle selon la ligne 3-3 de la figure 2;
- la Fig. 4 est une vue à plus grande échelle, en coupe longitudinale selon la ligne 4-4 de la figure 2 représentant le dispositif de bridage selon l'invention en phase repos;
- la Fig. 5 est une vue analogue à la figure 4 représentant le dispositif de bridage en phase de serrage;
- la Fig. 6 est une vue en coupe transversale du vérin de bridage représentant les différentes canalisations réalisées dans le corps du vérin de mise en charge et dans le corps du système de verrouillage;
- la Fig. 7 représente le synoptique des connexions hydrauliques assurant le fonctionnement du dispositif de bridage automatique.

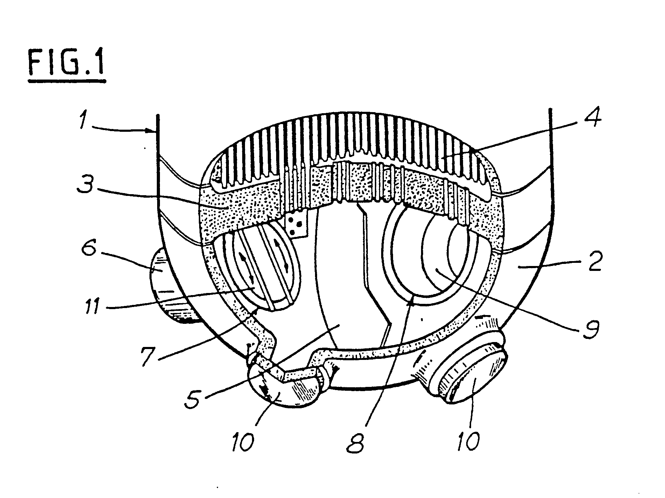

Si l'on se réfère tout d'abord à la Fig. 1, on a représenté en perspective et schématiquement un générateur de vapeur comprenant une enceinte cylindrique 1 fermée par un fond 2 en forme de calotte sphérique. Une plaque tubulaire 3 sur laquelle sont fixés un certain nombre de tubes 4 est interposée entre l'enceinte cylindrique et le fond 2, définissant ainsi une boîte à eau, qui est partagé en deux compartiments par une cloison intermédiaire verticale 5.

Le fluide primaire, chauffé dans le réacteur, arrive par une tubulure 6, débouchant dans le fond 2 par un orifice 7. Il passe dans les tubes 4 ayant une forme en U renversé, et, après avoir cédé sa chaleur au fluide secondaire, ressort dans le fond du générateur 2 de l'autre côté de la paroi 5, d'où il est évacué par l'ouverture 8 dans une tubulure 9. Dans l'enceinte 1, les tubes 4 sont noyés dans le fluide secondaire qui est ainsi vaporisé.

Le fond demi-sphérique 2 du générateur de vapeur est ainsi muni de deux orifices 7 et 8 qui débouchent dans les tubulures 6 et 9.

Pour la vérification et l'entretien du circuit du fluide primaire, le fond 2 est, à cet effet, muni de deux orifices 10 placés de part et d'autre de la cloison 5 et par lesquels un opérateur peut pénétrer dans chaque compartiment du fond 2.

Afin de ne pas diminuer la résistance du fond 2, les orifices d'accès 10 ont une dimension aussi réduite que possible, et leur diamètre est limité à celui qui est juste suffisant pour le passage d'un opérateur revêtu d'une combinaison de protection.

Avant de commencer les opérations de vérification et d'entretien, l'opérateur effectue sur l'orifice d'entrée 7 ou sur l'orifice de sortie 8 la mise en place et la fixation d'une plaque d'obturation 11, également appelée tape d'obturation.

Pour permettre le passage par les orifices d'accès 10, la plaque d'obturation 11 est par exemple réalisée en plusieurs panneaux qui sont assemblés entre eux pour former un disque ayant le même diamètre que l'orifice à obturer. Chacun de ces panneaux est réalisé en un matériau à faible densité revêtu de fibres de carbone liées par de la résine.

La plaque d'obturation 11 doit évidemment être maintenue et fixée sur l'ouverture par un dispositif de bridage 20a permettant notamment d'obtenir une étanchéité très efficace à l'effet de fond constitué par la pression de la colonne d'eau présente dans la tuyauterie.

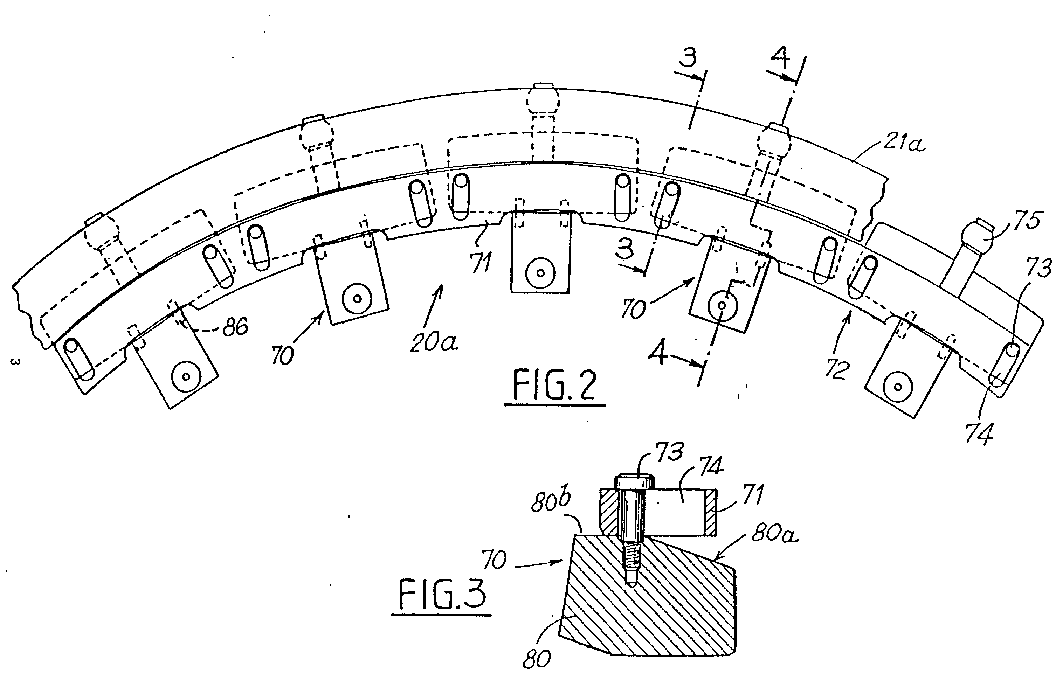

Ce dispositif de bridage 20a, représenté aux Fig. 2, 3 et 4, se compose d'un anneau porteur 21a, implanté par soudage sur les orifices 7 et 8 des tubulures 6 et 9 à obturer.

L'anneau porteur 21a porte sur sa face latérale interne une gorge trapézoïdale 22a comportant une face inclinée 23a dont l'angle α doit être supérieur à l'angle de frottement des matériaux venant en contact, et ceci afin d'éviter tout coincement dans ladite gorge. La valeur de l'angle α est d'environ 15°.

Un décrochement 24 est situé sous la gorge trapézoïdale 22a et assure le positionnement de la plaque 11 et l'assise d'un joint d'étanchéité 12. La profondeur du décrochement 24 est légèrement inférieure à la valeur des épaisseurs cumulées de la plaque 11 et du joint d'étanchéité 12.

Le maintien de la plaque d'obturation 11 dans le décrochement 24 est réalisé par une série de vérins désignés chacun dans son ensemble par la référence 70.

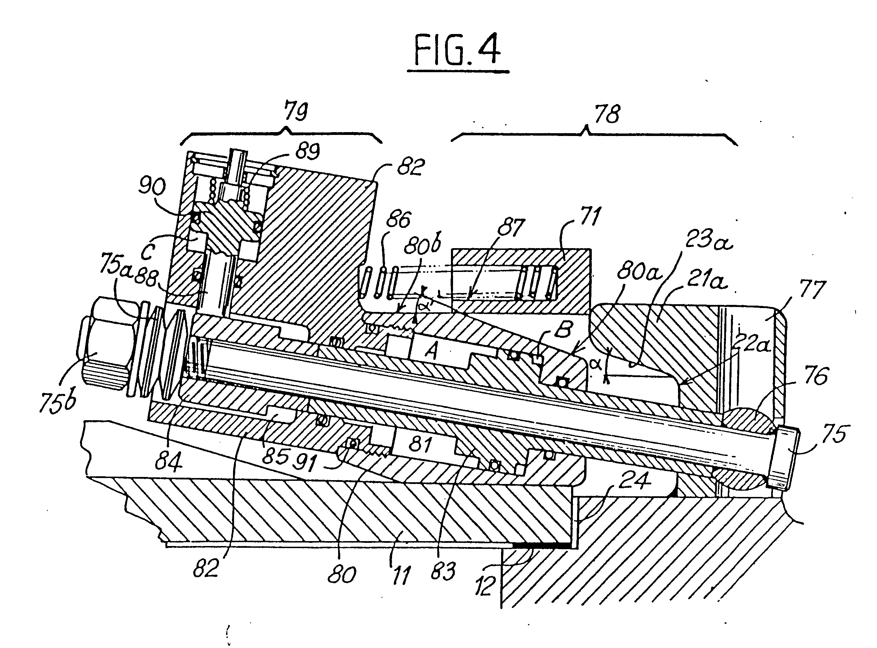

Les vérins de bridage 70 sont reliés entre eux par un ou plusieurs secteurs de couronne circulaire 71 pour former sur le pourtour de la plaque d'obturation 11, par exemple quatre chapelets 72 composés chacun de cinq vérins de bridage 70 comme représenté sur la figure 2. Les vérins de bridage 70 sont assemblés un à un avec le secteur de couronne circulaire 71 par l'intermédiaire de deux vis-guides 73 (figure 3) insérées chacune dans une des lumières oblongues 74 prévues dans le secteur 71, puis vissées en butée dans le vérin 70 comme cela sera précisé ultérieurement.

Chaque vérin de bridage 70 est relié à l'anneau porteur 21a par l'intermédiaire d'un boulon 75 associé à une sphère d'ancrage 76 placée dans un logement cylindrique 77 pratiqué dans ledit anneau porteur 21a et en appui sur la tête du boulon 75.

La représentation de la figure 4 permet de visualiser en phase repos un des vingt vérins de bridage 70 constituant le dispositif selon l'invention.

Chacun de ces vérins 70 est constitué par deux sous-ensembles comprenant respectivement un vérin de mise en charge 78 et son système de verrouillage 79.

Le vérin de mise en charge 78 est formé par un corps 80 comportant une cavité interne 81 dans laquelle est vissé le corps 82 du système de verrouillage 79.

La tige du boulon 75 traverse le corps 80 du vérin de mise en charge 78 et le corps 82 du système de verrouillage 79. Sur cette tige sont montés d'une part un piston 83 placé dans la cavité 81 du corps 80 et d'autre part une butée de verrouillage 84 positionnée dans un évidement interne 85 prévu à l'intérieur du corps 82 du système de verrouillage. Le piston 83 délimite dans la cavité interne 81 du corps 80 deux petites chambres A et B.

Le piston 83 et la butée de verrouillage 84 sont tous deux maintenus sous une charge constante et prédéterminée grâce à l'action d'éléments élastiques comme par exemple un ressort ou des rondelles "Belle-ville" 75a précontraintes par l'écrou 75b. Ces rondelles "Belleville" 75a assurent une charge constante de 200 kg par boulon 75 sur une plage de compression permettant de s'affranchir des tolérances de réalisation des pièces. La tige du boulon 75, en dehors de son rôle de reprise des efforts de traction lors de la phase de serrage, assure aussi la fonction d'axe de guidage axial du piston 83 et de la butée de verrouillage 84.

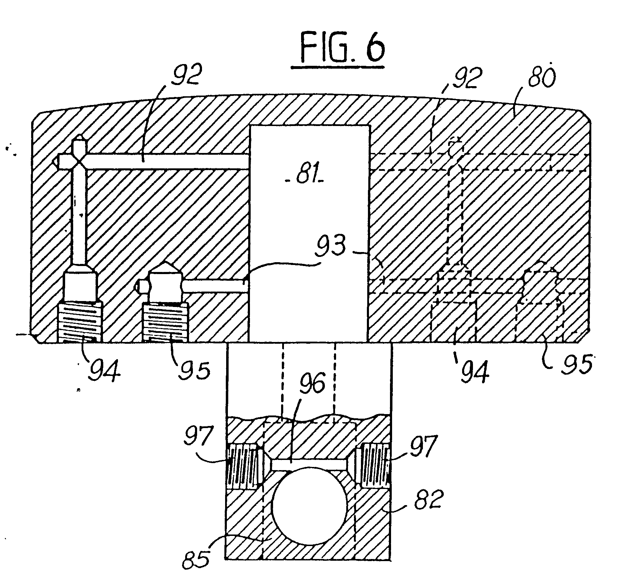

Comme l'illustre la figure 6, le corps 80 du vérin de mise en charge 78 se constitue d'un barreau en forme de secteur circulaire dont le profil extérieur épouse la surface intérieure de la gorge trapèzoïdale 22a de l'anneau porteur 21a. Le profil en forme de coin du corps 80 (figure 3) possède une face supérieure 80a en partie inclinée d'un angle $\alpha'$ de même valeur que l'angle de la face inclinée de la gorge trapèzoïdale 22a de l'anneau porteur, soit 15°. La face inférieure du corps 80 est en appui sur la plaque d'obturation 11.

La face supérieure du corps 80 possède également une partie horizontale 80b surmontée par le secteur de couronne circulaire 71 formant également une membrure de manutention qui assure une double fonction.

La première est de permettre une manutention et une mise en place aisées sur l'anneau porteur 21a en assurant la constitution d'un chapelet 72 comprenant cinq vérins de bridage 70. Comme indiqué précédemment, les vérins de bridage 70 sont assemblés un à un avec le secteur de couronne circulaire 71 par les deux vis-guides 73 qui sont vissées en butée dans le corps 80 de chaque vérin de mise en charge 78. La liaison ainsi réalisée autorise un déplacement radial du secteur de couronne circulaire 71 par rapport à l'anneau porteur 21a.

La seconde fonction du secteur de couronne circulaire 71 est d'assurer une individualisation de fonctionnement pour chacun des vérins de bridage 70 composant un chapelet afin de s'adapter à leurs caractéristiques propres, lesquelles peuvent être à l'origine du retard de déplacement d'un vérin par rapport aux autres entraînant alors un porte-à-faux dudit secteur de couronne circulaire.

Pour éviter cela, une liaison souple est assurée entre le corps 80 de chaque vérin de mise en charge 78 et le secteur de couronne circulaire 71. Elle est réalisée grâce à la combinaison des trous oblongs 74 associés aux vis-guides 73 avec une série de couples de ressorts 86 logés chacun dans un trou borgne 87 et en appui sur le corps 82 du système de verrouillage 79, ce montage assure ainsi une adaptation de position de chaque vérin par rapport au secteur de couronne circulaire 71.

Dans le corps 82 du système de verrouillage 79, représenté en phase repos sur la figure 4, est placé un doigt de verrouillage 88 venant se plaquer contre la butée de verrouillage 84 enfilé sur la tige du boulon 75. Le doigt de verrouillage 88 se présente sous la forme d'un mini vérin simple effet dont le ressort 89 assure l'indexage automatique lors de la phase de bridage. Le doigt de verrouillage 88 comporte un piston 90 délimitant dans le corps 82 une petite chambre C. L'extrémité supérieure du piston 90 est dépassante en position déverrouillée et peut être utilisée en tant qu'indicateur visuelle de la position du doigt de verrouillage 88.

Le corps 82 du système de verrouillage est vissé directement sur le corps 80 du vérin de mise en charge 78 dans l'axe de la cavité interne 81 de ce dernier. L'étanchéité de cette liaison et celle du reste du dispositif de bridage est assurée par une série de joints toriques 91.

Afin de minimiser la masse de chacun des chapelets 72 et faciliter ainsi leur introduction dans le générateur de vapeur et leur mise en place, toutes les pièces constituant le dispositif de bridage, sauf le boulon 75, la rotule 76, les rondelles "Belleville" 75a, la butée de verrouillage 84 et le doigt de verrouillage 88, sont réalisées en alliage léger avec oxydation anodique. La masse ainsi obtenue pour chaque chapelet 72 est d'environ 6,5 kg.

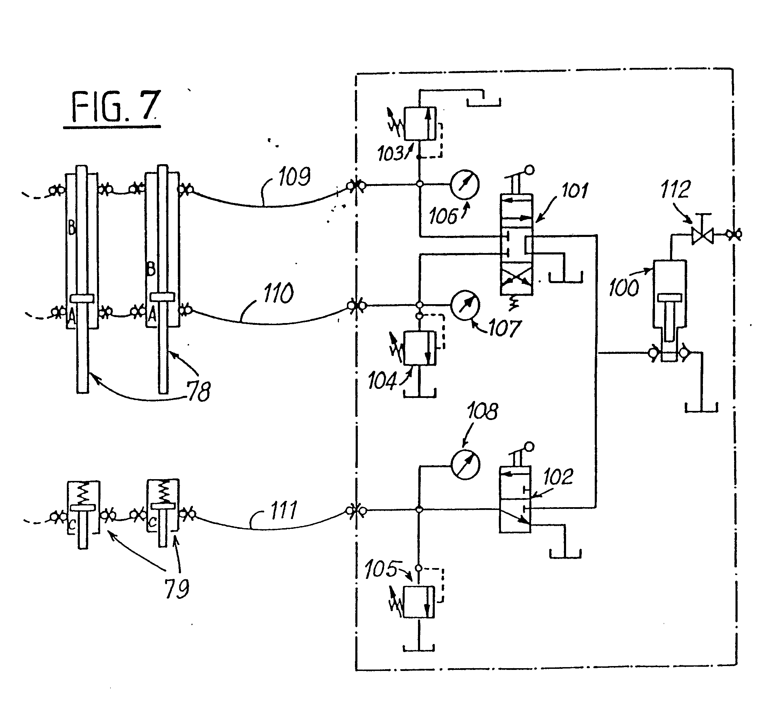

L'alimentation des chambres A et B du corps 80 du vérin de mise en charge 78 est réalisée respectivement par des petits canaux 92 et 93 comprenant chacun une double entrée 94 et 95 permettant de raccorder les vérins les uns aux autres par des liaisons hydrauliques souples munies de raccords auto-obturants (figure 6). L'alimentation de la chambre C du système de verrouillage 79 est également réalisée par un petit canal 96 comprenant une double entrée 97. Les pressions hydrauliques nécessaires lors des phases de serrage, desserrage et de déverrouillage sont fournies par un groupe hydraulique dont le synoptique est représenté à la figure 7.

Ce groupe hydraulique comprend:

- une pompe hydropneumatique 100, par exemple de 100 bars minimum, alimentée par le réseau air comprimé au travers d'un conditionneur d'air non représenté;
- un distributeur 101 à commande manuelle permettant d'admettre la pression lors des phases serrage ou desserrage;
- un distributeur 102 à commande manuelle permettant d'admettre la pression lors du déverrouillage;
- trois clapets 103, 104 et 105 tarés respectivement aux pressions de serrage P1, de desserrage P2 et de déverrouillage P3. La pression P1 aura par exemple une valeur d'envrion 45 bars pour obtenir au minimum la charge de 200 Kg, afin de vaincre les efforts dus à d'éventuels grippages, la pression de desserrage P2 aura une valeur, par exemple de 70 bars, se traduisant par un effet utile de 310 kg, enfin, la pression de déverrouillage P3 aura la valeur par exemple de 10 bars;
- trois manomètres 106, 107 et 108 indiquant chacune des trois pressions d'utilisation.

Le fluide hydraulique utilisé est de l'eau évitant ainsi tout risque de pollution en cas de fuite accidentelle.

La mise en oeuvre du dispositif de bridage automatique pour l'étape d'obturation comprend les étapes suivantes:

Tout d'abord, on amène et on met en place sur l'anneau porteur 21a successivement chacun des quatre chapelets 72, et on raccorde hydrauliquement entre eux les quatre chapelets puis on branche sur l'un des vérins 70 les trois flexibles d'alimentation 109, 110 et 111 représentés sur le synoptique hydraulique de la figure 7. On met la pompe 100 du groupe en marche en ouvrant le robinet 112.

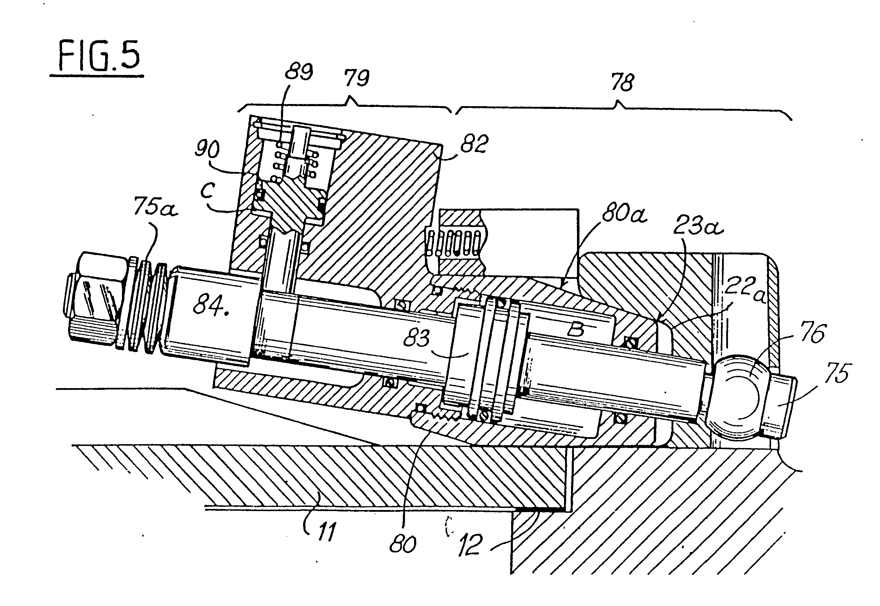

On agit sur le distributeur 101 de manière à pressuriser simultanément la chambre 8 de chaque vérin de mise en charge 78 à la pression P1. Cette montée en pression se traduit d'abord par le déplacement du corps 80 de chaque vérin de mise en charge 78 puis, après coïncement de celui-ci dans la gorge trapézoïdale 22a de l'anneau porteur 21a, par le déplacement combiné du piston 83 et de la butée 84 qui provoque alors la compression des rondelles "Belleville" 75a, assurant un décalage suffisant de la butée de verrouillage 84 pour permettre l'indexage automatique du doigt de verrouillage 88 (figure 5).

On vérifie visuellement le bon verrouillage des vingt doigts de verrouillage 88, puis on déconnecte les trois flexibles d'alimentation 109, 110 et 111.

Le glissement de la face inclinée 80a de chaque corps 80 sur la face inclinée 23a de l'anneau porteur 21a se traduit par un effort de compression des corps 80 sur la plaque d'obturation 11, laquelle comprime à son tour le joint d'étanchéité 12.

L'étape de dépose du dispositif de bridage automatique comprend les phases suivantes:

Tout d'abord, on connecte les trois flexibles d'alimentation 109, 110 et 111, puis on agit sur le distributeur 101 de manière à pressuriser simultanément la chambre B de chaque vérin de mise en charge 78 à la pression P1 afin de recomprimer les rondelles "Belleville" 75a et débloquer chacun des vingt doigts de verrouillage 88.

On agit sur le distributeur 102 de manière à pressuriser la chambre C de chaque piston de verrouillage 83 permettant ainsi le retrait du doigt de verrouillage 88, ce retrait étant vérifié visuellement par l'apparition de l'extrémité supérieure du piston de verrouillage. On agit sur le distributeur 101 de manière à pressuriser simultanément la chambre A de chaque vérin de mise en charge 88 à la pression P2, provoquant alors le décoïncement et le déplacement en arrière du corps 80 de chaque vérin de mise en charge 77. On ramène le distributeur 102 en position d'origine et on déconnecte les trois flexibles d'alimentation 109, 110 et 111, ainsi que les liaisons des quatre chapelets 72 entre eux.

Ensuite, il suffit de retirer successivement chacun des quatre chapelets 72 de sur l'anneau porteur 21a.

Cette alimentation en série des verins de bridage, permet aux pressions de s'égaliser et d'obtenir une pression constante et la même contrainte pour l'ensemble des verins.

De plus, une telle automatisation offre d'une part l'avantage d'abaisser la dose de rayonnements reçue par le personnel d'intervention, ceci grâce à la diminution du temps de bridage de la plaque d'obturation qui réduit d'autant le séjour passé dans la zone active constituée par la boîte à eau du générateur de vapeur, et d'autre part, permet de bénéficier d'une réduction homogène et d'un meilleur contrôle des sollicitations mécaniques engendrées par l'effort de bridage.

C'est ainsi que le dispositif de bridage à été décrit pour s'adapter au cas general d'un orifice de section circulaire, mais la forme des elements peut évidemment être adaptée à une autre forme d'orifice. En outre, l'invention à été décrite specialement dans le cas de generateurs de vapeur mais peut être bien evidement utilisée dans d'autres applications.

**Revendications**

1. Dispositif de mise en place et de maintien d'une plaque d'obturation (11) d'un orifice (7, 8) dans une enceinte comportant un anneau porteur (21a) fixé sur le pourtour dudit orifice à obturer, et muni d'une gorge interne (22a) à une face inclinée (23a) à l'intérieur de laquelle sont positionnées des cales de bridage (80) qui s'appliquent sur la périphérie de la plaque d'obturation (11) et qui, sous l'action d'organes de blocage (70) coopérant avec l'anneau porteur (21a) se déplacent individuellement dans ladite gorge selon une direction radiale et descendante pour exercer un effort de compression sur ladite plaque d'obturation, caractérisé par le fait que les organes de blocage sont constitués par une série de vérins (70) disposés en périphérie de la plaque d'obturation (11) et assemblés entre eux, par l'intermédiaire d'au moins un secteur de couronne circulaire (71) sous forme d'un ou de plusieurs chapelets indépendants (72) couvrant le pourtour de la plaque d'obturation (11), l'actionnement simultané desdits vérins de bridage (70) étant obtenu grâce à une commande unique qui permet d'agir uniformément et individuellement sur chaque cale de bridage (80).

2. Dispositif selon la revendication 1, caractérisé par le fait que les cales de bridage (80) et la gorge interne (22a) ont leur face supérieure inclinée d'un angle supérieur à l'angle de frottement des matériaux venant en contact.

3. Dispositif selon la revendication 1, caractérisé par le fait que chaque vérin de bridage (70) est formé de deux sous-ensembles comprenant respectivement d'une part le vérin de mise en charge (78) dont le corps (80) constitue la cale de bridage et d'autre part son système de verrouillage (79).

4. Dispositif selon la revendication 3, caractérisé par le fait que le corps (80) du vérin de mise en charge (78) est constitué d'un barreau en forme de secteur circulaire dont le profil extérieur épouse la surface intérieure de la gorge trapézoïdale (22a) de l'anneau porteur (21a) et possède une face supérieure (80a) en partie inclinée d'un angle de même valeur que l'angle de la face inclinée (23a) de ladite gorge trapézoïdale (22a).

5. Dispositif selon la revendication 1, caractérisé par le fait que les vérins de bridage (70) sont assemblés un à un avec le secteur de couronne circulaire (71) par des moyens de liaison souples autorisant un déplacement radial du secteur à couronne circulaire (71) par rapport à l'anneau porteur (21a) et permettant une adaptation de position de chaque vérin (70) par rapport audit secteur de couronne circulaire.

6. Dispositif selon la revendication 5, caractérisé par le fait que les moyens de liaison souples sont constitués, pour chaque vérin de bridage (70), d'une part par deux vis-guides (73) insérées chacune dans une lumière oblongue (74) prévue dans le secteur de couronne circulaire (71) et vissées en butée dans le corps (80) du vérin de mise en charge (78) et d'autre part une série de couples de ressorts de rappel (86) logés chacun dans un trou borgne (87) dudit secteur de couronne circulaire et en appui sur le système de verrouillage (79).

7. Dispositif selon la revendication 1, caractérisé par le fait que les vérins de bridage (70) est relié à l'anneau porteur (21a) par l'intermédiaire d'un boulon (75) associé à une sphère d'ancrage (76) placée dans un logement cylindrique (77) pratiqué dans ledit anneau porteur (21a).

8. Dispositif selon la revendication 7, caractérisé par le fait que la tige du boulon (75) traverse le corps (80) du vérin de mise en charge (78) et le corps (82) du système de verrouillage (79) qui est vissé directement sur le corps (80) dudit vérin de mise en charge (78) dans l'axe de ce dernier.

9. Dispositif selon la revendication 8, caractérisé par le fait que sur la tige du boulon (75) sont montés d'une part un piston (83) placé dans une cavité (81) du corps (80) du vérin de mise en charge (78) et délimitant dans celle-ci deux petites chambres A et B, et d'autre part une butée de verrouillage (84) positionnée dans un évidemment (85) prévu à l'intérieur du corps (82) du système de verouillage (79).

10. Dispositif selon la revendication 9, caractérisé par le fait que le piston (83) et la butée de verouillage (84) sont tous deux maintenus sous une charge constante et prédéterminé grâce à l'action d'au moins un élément élastique comme par exemple un ressort ou des rondelles "Belleville" (75a).

11. Dispositif selon la revendication 3, caractérisé par le fait que le systéme de verouillage (79) comporte un doigt de verrouillage (88) coopérant avec la butée (84) enfilée sur la tige du boulon (75) et constituant dans le corps (82) dudit système de verrouillage un petit vérin à simple effet.

12. Dispositif selon la revendication 1, caractérisé par le fait que les pressions hydrauliques nécessaires lors des phases de serrage, desserrage et de déverrouillage sont fournies par un groupe hydraulique, raccordé à l'un des vérins de bridage (70) lesdits vérins (70) étant raccordés en série les uns aux autres.

**Patentansprüche**

1. Vorrichtung zum Anordnen und Festhalten einer Abdeckplatte (11) einer Öffnung (7, 8) in einem Behälter mit einem Tragring (21a), der an dem Umfang der zu bedeckenden Öffnung befestigt ist, und mit einer inneren Auskehlung (22a) für eine geneigte Fläche (23a) versehen ist, wobei im Inneren dieser Flanschkeile (80) angeordnet sind, die auf den Umfang der Abdeckplatte (11) wirken und die, welche unter der Einwirkung von Blockierungsorganen (70) mit dem Tragring (21a) zusammenwirken, sich einzeln in der Auskehlung in radialer und absteigender Richtung bewegen, um eine Kompressionskraft auf die Abdeckplatte auszuüben, dadurch gekennzeichnet, daß die Blockierungsorgane aus einer Serie von Stelltrieben (70) gebildet sind, die am Umfang der Abdeckplatte (11) angeordnet und untereinander mittels wenigstens eines kreisförmigen Kranzabschnitts (74) in Form einer oder mehrerer unabhängiger Deckelketten (chapelets) (72) zusammengefügt sind, die den Umfang der Abdeckplatte (11) bedecken, wobei die gleichzeitige Betätigung der Flanschtriebe (70) dank einer einzigen Betätigung erhalten wird, die erlaubt gleichermaßen und einzeln auf jeden Flanschkeil (80) einzuwirken.

2. Vorrichtung nach Anspruch 1, dadurch gekennzeichnet, daß die Flanschkeile (80), und die innere Auskehlung (22a) ihre Oberseite unter einem Winkel geneigt haben, der größer ist als der Reibungswinkel der in Kontakt gebrachten Materialien.

3. Vorrichtung nach Anspruch 1, dadurch gekennzeichnet, daß jeder Flanschtrieb (70) aus zwei Unteranordnungen gebildet ist, die jeweils einerseits den Ladetrieb (78), dessen Körper (80) den Flanschkeil bildet und andererseits sein Verriegelungssystem (70) bilden.

4. Vorrichtung nach Anspruch 3, dadurch gekennzeichnet, daß der Körper (80) des Ladetriebs (78) aus einem Balken von kreisförmigen Querschnitt gebildet ist, dessen Außenprofil an der Innenfläche der trapezförmigen Auskehlung (22a) des Tragrings (21a) anliegt und eine Oberseite (80a) aufweist, die einen geneigten Abschnitt und einen Winkel vom gleichen Wert aufweist, wie der Winkel der geneigten Seite (23a) der trapezförmigen Auskehlung (22a).

5. Vorrichtung nach Anspruch 1, dadurch gekennzeichnet, daß die Flanschtriebe (70) einer zum anderen mit dem kreisförmigen Kranz (71) mittels weichen oder nachgiebigen Verbindungseinrichtungen zusammengefügt sind, die eine radiale Bewegung des kreisförmigen Kranzabschnitts (71) bezüglich des Tragrings (21a) erlauben und eine Anpassung der Position eines jeden Triebs (70) bezüglich des kreisförmigen Kranzabschnitts erlauben.

6. Vorrichtung nach Anspruch 5, dadurch gekennzeichnet, daß die weichen oder nachgiebigen Verbindungseinrichtungen für jeden Flanschtrieb (70) einerseits aus zwei Schraubenführungen (73), von denen jede in eine längliche Ausnehmung (74) eingesetzt ist, die in dem kreisförmigen Kranzabschnitt (71) vorgesehen ist, und in Anschlag in den Körper (80) des Ladetriebs (78) eingeschraubt sind, und andererseits aus einer Reihe von Spannfederpaaren (86) gebildet sind, wobei jedes in einem Sackloch (87) des kreisförmigen Kranzabschnitts angeordnet und in Anlage an das Verriegelungssystem (79) sind.

7. Vorrichtung nach Anspruch 1, dadurch gekennzeichnet, daß jeder Flanschtrieb (70) mit dem Tragring (21a) über einen Bolzen (75) verbunden ist, der mit einem Ankerungsbereich (76) verbunden ist, der in einer zylindrischen Aufnahme (77) angeordnet ist, die in dem Tragring (21a) ausgebildet ist.

8. Vorrichtung nach Anspruch 7, dadurch gekennzeichnet, daß die Stange des Bolzens (75) den Körper (80) des Ladetriebs (78) und den Körper (82) des Verriegelungssystems (79) durchquert, der direkt auf dem Körper (80) des Ladetriebs (78) in dessen Achse aufgeschraubt ist.

9. Vorrichtung nach Anspruch 8, dadurch gekennzeichnet, daß auf der Stange des Bolzens (75) einerseits ein Kolben (83), der in einem Hohlraum (81) des Körpers (80) des Lasttriebs (78) angeordnet ist und in diesem zwei kleine Kammern A und B begrenzt, und andererseits ein Verriegelungsanschlag (84) angeordnet ist, der in einer Ausnehmung (85) angeordnet ist, die im Inneren des Körpers (82) des Verriegelungssystems (79) vorgesehen ist.

10. Vorrichtung nach Anspruch 9, dadurch gekennzeichnet, daß der Kolben (83) und der Verriegelungsanschlag (84) beide unter konstanter und vorbestimmter Last dank der Einwirkung wenigstens eines der elastischen Elemente, wie beispielsweise einer Feder oder "Belleville" Ringen (75a) gehalten werden.

11. Vorrichtung nach Anspruch 3, dadurch gekennzeichnet, daß das Verriegelungssystem (29) einen Verriegelungsfinger (88) aufweist, der mit dem Anschlag (84) zusammenwirkt, der auf die Stange des Bolzens (75) aufgebracht ist und in dem Körper (82) des Verriegelungssystems einen kleinen Stelltrieb mit einfacher Wirkung bildet.

12. Vorrichtung nach Anspruch 1, dadurch gekennzeichnet, daß die hydraulischen Drücke, die bei den Phasen des Einklemmens, des Entklemmens und des Entriegelns notwendig sind, durch eine Hydraulikgruppe bzw. Druckwassergruppe geliefert werden, die mit einem der Flanschtriebe (70) verbunden ist, wobei die Triebe (70) in Reihe untereinander verbunden sind.

## Claims

1. Device for the installation and retention of a shutter plate (11) for an orifice (7, 8) in an enclosure comprising a carrier ring (21a) fixed to the circumference of the said orifice to be shut and provided with an internal channel (22a) having an inclined face (23a), within which are positioned clamping wedges (80), which are applied to the periphery of the shutter plate (11) and which, under the action of locking members (70) cooperate with the carrier ring (21a) moving individually in said channel in a radial, downward direction, in order to exert a compressive force on said shutter plate, characterized in that the locking members are constituted by a series of jacks (70) arranged on the periphery of the shutter plate (11) and assembled with one another by means of at least one circular ring sector (71) in the form of one or more independent stringers (72) covering the circumference of the shutter plate (11), the simultaneous actuation of said clamping jacks (70) being obtained through a single control making it possible to act uniformly and individually on each clamping wedge (80).

2. Device according to claim 1, characterized in that the clamping wedges (80) and internal channel (22a) have their upper face inclined by an angle greater than the angle of friction of the materials coming into contact.

3. Device according to claim 1, characterized in that each clamping jack (70) is formed by two subassemblies respectively comprising on the one hand the loading jack (78), whose body (80) constitutes the clamping wedge and on the other hand its locking system (79).

4. Device according to claim 3, characterized in that the body (80) of the loading jack (78) is constituted by a bar in the form of a circular sector, whose outer profile matches the inner surface of the trapezoidal channel (22a) of the carrier ring (21a) and has an upper face (80a) partly inclined at an angle of the same value as the angle of the sloping face (23a) of said trapezoidal channel (22a).

5. Device according to claim 1, characterized in that the clamping jacks (70) are individually assembled with the circular ring sector (71) by flexible connecting means allowing a radial displacement of the circular ring sector (71) with respect to the carrier ring (21a) and permitting a positional adaptation of each jack (70) with respect to the circular ring sector.

6. Device according to claim 5, characterized in that the flexible connecting means are constituted, for each clamping jack (70), on the one hand by two guide screws (73), each inserted in an oblong slot (74) provided in the circular ring sector (71) and screwed into body (80) of loading jack (78) until they abut and on the other hand a series of pairs of restoring springs (86), each housed in a blind hole (87) of the circular ring sector and bearing against the locking system (79).

7. Device according to claim 1, characterized in that each clamping jack (70) is connected to the carrier ring (21a) via a bolt (75) associated with an anchoring ball (76) placed in a cylindrical housing (77) made in said carrier ring (21a).

8. Device according to claim 7, characterized in that the shank of bolt (75) traverses the body (80) of the loading jack (78) and the body (82) of the locking system (79) is screwed directly onto the body (80) of said loading jack (78) in the axis of the latter.

9. Device according to claim 8, characterized in that on the shank of bolt (75) are mounted on the one hand a piston (83) placed in a cavity (81) of body (80) of the loading jack (78) and defining therein two small chambers A and B and on the other hand a locking abutment (84) positioned in a recess (85) located within the body (82) of locking system (79).

10. Device according to claim 9, characterized in that the piston (83) and the locking abutment (84) are both maintained under a constant, predetermined load as a result of the action of at least one elastic element, such as e.g. a spring or Belleville washers (75a).

11. Device according to claim 3, characterized in that the locking system (79) also has a catch finger (88) cooperating with the abutment (84) strung onto the shank of bolt (75) and forming, in the body (82) of the said locking system, a small single-acting jack.

12. Device according to claim 1, characterized in that the hydraulic pressures required during the tightening, releasing and unlocking phases are supplied by a hydraulic unit connected to one of the clamping jacks (70), which are connected in series with one another.

# FIG.1

FIG.2

FIG.3

EP 0 213 024 B1

# FIG.4

EP 0 213 024 B1

FIG.5

EP 0 213 024 B1

## FIG. 6

EP 0 213 024 B1

FIG. 7

EP 0 213 024 B1